# EUROPEAN PATENT APPLICATION

(11) **EP 2 368 842 A1**
(43) Date of publication of application: **28.09.2011**
(21) Application number: 09830319.1
(22) Date of filing: 24.11.2009
(51) Int. Cl.: C01B 7/07, B01D 3/14

(54) **HYDROCHLORIC ACID PURIFYING METHOD**

(30) Priority: 03.12.2008 JP 2008308724
(71) Applicant: Sumitomo Chemical Company, Limited, Tokyo 104-8260 (JP)
(72) Inventor: SHIMIZU, Toyomitsu, Niihama-shi Ehime 792-0025 (JP); OMOTO, Norihito, Niihama-shi Ehime 792-0025 (JP); FUTAGAMI, Shoichi, Niihama-shi Ehime 792-0012 (JP); MIYAMURA, Sadayuki, Niihama-shi Ehime 792-0044 (JP)
(74) Representative: Duckworth, Timothy John
(86) International application number: PCT/JP2009/069766
(87) International publication number: WO 2010/064552

(57) **Abstract**

Provided is a method of purifying hydrochloric acid by removing an organic substance having a boiling point of - 25 °C to 120 °C under atmospheric pressure from an organic substance-containing hydrochloric acid that contains the organic substance and has a hydrogen chloride concentration higher than an azeotropic hydrogen chloride concentration under atmospheric pressure. The method includes the step of subjecting the organic substance-containing hydrochloric acid to distillation using a distillation tower at an operation pressure set such that an azeotropic hydrogen chloride concentration under the operation pressure is higher than the hydrogen chloride concentration of the organic substance-containing hydrochloric acid, to distill out the organic substance from the top of the distillation tower.

## Description

### TECHNICAL FIELD

The present invention relates to a method of purifying hydrochloric acid, and more specifically, to a method of producing high-purity hydrochloric acid not containing an organic substance from hydrochloric acid containing the organic substance.

### BACKGROUND ART

In the process of producing a compound in which a chloro compound is treated, hydrochloric acid is generated as a by-product and the like. This hydrochloric acid usually contains impurities characteristic of the producing process. For example, hydrochloric acid obtained as a by-product in the process of producing allyl chloride from propylene and chlorine gas contains organic impurities having a relatively low boiling point, such as 2-chloropropane (2CP) [bp = 36 °C], allyl chloride [bp = 23 °C] and isopropyl alcohol (IPA) [bp = 82 °C].

Furthermore, hydrochloric acid obtained as a by-product in the process of obtaining isocyanate by the reaction of amine and phosgene contains organic impurities having a relatively high boiling point, such as chlorobenzene [bp = 131 °C] and dichlorobenzene [bp = 180 °C] which are mainly used as solvents.

In order to effectively utilize the above-described by-product hydrochloric acid as raw materials in other synthetic processes, it is preferable that a very small amount of organic impurities contained in the by-product hydrochloric acid is removed to the maximum extent possible. For example, Japanese Patent Laying-Open No. 2003-112907 (Patent Document 1) discloses that an organic substance in hydrogen chloride is removed by activated carbon adsorption.

### PRIOR ART DOCUMENTS

### PATENT DOCUMENTS

Patent Document 1: Japanese Patent Laying-Open No. 2003-112907

### SUMMARY OF THE INVENTION

### PROBLEMS TO BE SOLVED BY THE INVENTION

However, it is difficult by the activated carbon adsorption to obtain high-purity hydrochloric acid by removing organic impurities having a relatively low boiling point from hydrochloric acid containing the organic impurities such as hydrochloric acid produced as a by-product in the process of producing allyl chloride.

An object of the present invention is to provide a method of producing high-purity hydrochloric acid substantially not containing an organic substance having a relatively low boiling point, specifically, - 25 °C to 120 °C, under atmospheric pressure, from hydrochloric acid containing the organic substance.

### MEANS FOR SOLVING THE PROBLEMS

The present invention provides a method of purifying hydrochloric acid by removing an organic substance having a boiling point of - 25 °C to 120 °C under atmospheric pressure from an organic substance-containing hydrochloric acid that contains the organic substance and has a hydrogen chloride concentration higher than an azeotropic hydrogen chloride concentration under atmospheric pressure. The method includes the step of subjecting the organic substance-containing hydrochloric acid to distillation using a distillation tower at an operation pressure set such that an azeotropic hydrogen chloride concentration under the operation pressure is higher than the hydrogen chloride concentration of the organic substance-containing hydrochloric acid, to distill out the organic substance from a top of the distillation tower.

It is preferable that the method of purifying hydrochloric acid according to the present invention includes the steps of: continuously introducing the organic substance-containing hydrochloric acid into the distillation tower; and subjecting the organic substance-containing hydrochloric acid to distillation using the distillation tower at the operation pressure set such that the azeotropic hydrogen chloride concentration under the operation pressure is higher than the hydrogen chloride concentration of the organic substance-containing hydrochloric acid, to distill out the organic substance from the top of the distillation tower and continuously collect hydrochloric acid substantially not containing the organic substance from a bottom of the distillation tower. Furthermore, the operation pressure is preferably in a range of 1 kPa to 90 kPa.

During the distillation of the organic substance-containing hydrochloric acid, it is preferable that the organic substance is distilled out from the top of the distillation tower while reflux is performed for condensing distillate gas from the top of the distillation tower and returning a part of an obtained condensate liquid to the top of the distillation tower.

The organic substance removed by the method of purifying hydrochloric acid according to the present invention is an organic substance having a boiling point of - 25 °C to 120 °C under atmospheric pressure and suitable examples thereof include isopropyl alcohol, 2-chloropropane, allyl chloride, and the like.

### EFFECTS OF THE INVENTION

According to the present invention, organic impurities can be effectively removed from hydrochloric acid containing the organic impurities having a boiling point of - 25 °C to 120 °C under atmospheric pressure, and particularly, from hydrochloric acid containing the organic impurities and having a hydrogen chloride concentration higher than an azeotropic hydrogen chloride concentration under atmospheric pressure. Consequently, high-purity hydrochloric acid can be obtained.

Furthermore, the purifying method according to the present invention allows complete or almost complete elimination of the loss of hydrogen chloride, due to purification process, that is contained in the organic substance-containing hydrochloric acid subjected to purification. Accordingly, purified hydrochloric acid containing the total or almost total amount of hydrogen chloride contained in the organic substance-containing hydrochloric acid subjected to purification can be obtained.

### BRIEF DESCRIPTION OF THE DRAWINGS

Fig. 1 is a diagram schematically showing a preferable example of a method of purifying hydrochloric acid according to the present invention and the configuration of an apparatus used therefor.
Fig. 2 is a flow diagram schematically showing an example of the process for obtaining high-purity hydrochloric acid substantially not containing isopropyl alcohol (IPA) from an organic substance-containing hydrochloric acid containing IPA, in accordance with the present invention.
Fig. 3 is a diagram showing the relationship of the pressure with the azeotropic hydrogen chloride concentration and the azeotropic point of hydrochloric acid.

### MODES FOR CARRYING OUT THE INVENTION

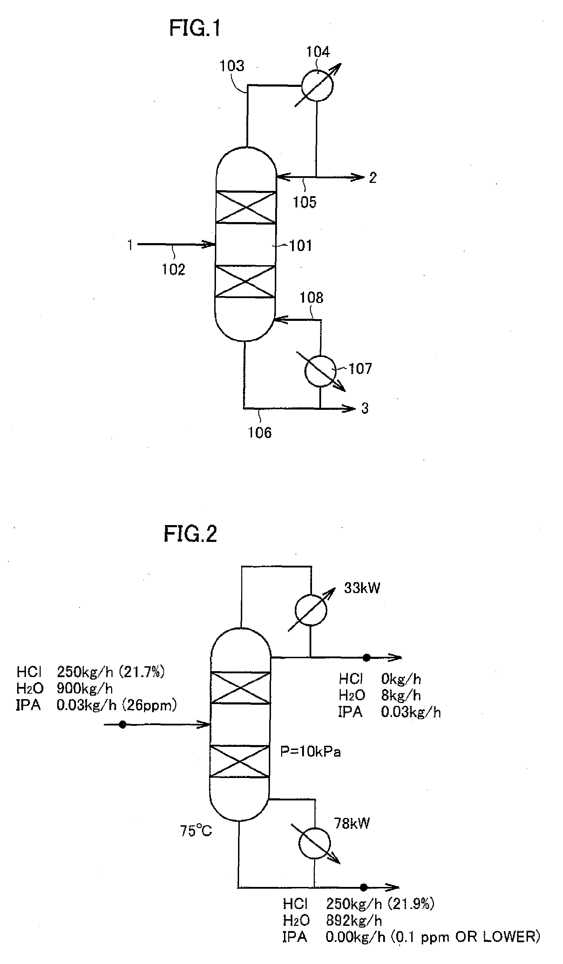

The present invention relates to a method of purifying hydrochloric acid by removing an organic substance having a boiling point of -25 °C to 120 °C under atmospheric pressure from an organic substance-containing hydrochloric acid that contains the organic substance and has a hydrogen chloride concentration higher than an azeotropic hydrogen chloride concentration under atmospheric pressure. Fig. 1 is a diagram schematically showing a preferable example of the method of purifying hydrochloric acid according to the present invention and the configuration of an apparatus used therefor. The method of purifying hydrochloric acid according to the present invention will be hereinafter described in detail with reference to Fig. 1.

Hydrochloric acid containing the organic substance subjected to the purifying method according to the present invention is the organic substance-containing hydrochloric acid that contains the organic substance having a boiling point of -25 °C to 120 °C under atmospheric pressure and has a hydrogen chloride concentration higher than an azeotropic hydrogen chloride concentration under atmospheric pressure. The organic substance having a boiling point of -25 °C to 120 °C under atmospheric pressure, that can be removed according to the present invention, may include various types of organic substances including, for example, isopropyl alcohol (IPA) [bp (the boiling point at 1 atm; the same shall apply hereinafter) = 82 °C], 2-chloropropane (2-CP) [bp = 36 °C], allyl chloride [bp = 23 °C], carbon tetrachloride [bp = 77 °C], dichloromethane [bp = 40 °C], chloromethane [bp =-24 °C], dichloroethane [bp = 57 °C], a vinyl chloride monomer [bp = -14°C], and the like. Particularly, the present invention allows effective removal of isopropyl alcohol, 2-chloropropane, allyl chloride, and the like in hydrochloric acid. The number of types of the organic substances contained in the organic substance-containing hydrochloric acid may be only one or two or more. The concentration of the organic substance contained in the organic substance-containing hydrochloric acid is not particularly limited, but is usually approximately 1 to 10000 mass ppm in the organic substance-containing hydrochloric acid, and preferably, approximately 10 to 1000 mass ppm.

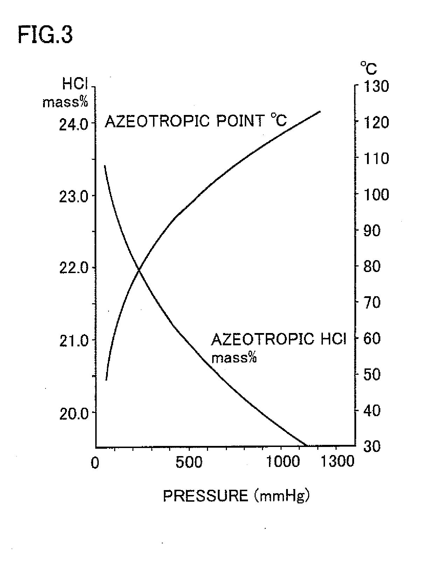

The organic substance-containing hydrochloric acid subjected to the purification method according to the present invention has a hydrogen chloride concentration mass of hydrogen chloride) /(the total mass of hydrogen chloride and water contained in the organic substance-containing hydrochloric acid) × 100 %] higher than the azeotropic hydrogen chloride concentration of hydrochloric acid under atmospheric pressure (usually, approximately 80 kPa to 120 kPa (absolute pressure). The "azeotropic hydrogen chloride concentration under atmospheric pressure" means the concentration of hydrogen chloride on the mass basis in the azeotropic composition of hydrochloric acid under atmospheric pressure. The relationship between the pressure and the azeotropic hydrogen chloride concentration of hydrochloric acid is described, for example, in "Soda Handbook" (published by Japan Soda Industry Association in 1998) and the like. The specific numerical value of the "azeotropic hydrogen chloride concentration under atmospheric pressure" can be referred to the document. Fig. 3 is a diagram showing the relationship of the pressure with the azeotropic hydrogen chloride concentration and the azeotropic point of hydrochloric acid disclosed in the document. The azeotropic hydrogen chloride concentration of hydrochloric acid is 20.2 percent by mass, and the azeotropic temperature (azeotropic point) is 108.7 °C at 101.3 kPa (1 atm). The organic substance-containing hydrochloric acid is not particularly limited. However, for example, an organic substance-containing hydrochloric acid obtained as a by-product in various processes of producing an organic compound can be used as it is. In addition, those subjected to the process required for the organic substance-containing hydrochloric acid (adjustment of the hydrogen chloride concentration, pre-purification, or the like) can also be used. Furthermore, the organic substance-containing hydrochloric acid may be obtained by absorbing, in water or hydrochloric acid, organic substance-containing hydrogen chloride gas obtained as a by-product in various processes of producing an organic compound.

The hydrogen chloride concentration of the organic substance-containing hydrochloric acid subjected to the purification method according to the present invention is not limited as long as it exceeds the azeotropic hydrogen chloride concentration of hydrochloric acid under atmospheric pressure as described above, but preferably, 20 percent by mass or more and 24 percent by mass or less, and more preferably, 21 percent by mass or more and 23.5 percent by mass or less. As described below, in the purification method according to the present invention, the organic substance-containing hydrochloric acid is subjected to distillation while adjusting the operation pressure such that the azeotropic hydrogen chloride concentration under the operation pressure is higher than the hydrogen chloride concentration of the organic substance-containing hydrochloric acid. When the hydrogen chloride concentration of the organic substance-containing hydrochloric acid exceeds 24 percent by mass, the operation pressure satisfying the above-described conditions cannot be achieved (see Fig. 3). In consideration of the degree of pressure reduction that can be achieved in a manufacturing plant and the like, it is preferable that the hydrogen chloride concentration of the organic substance-containing hydrochloric acid is equal to or less than 24 percent by mass.

In the present invention, referring to Fig. 1, an organic substance-containing hydrochloric acid 1 as described above is introduced into a distillation tower 101 through a piping 102 to perform distillation. The method of introducing organic substance-containing hydrochloric acid 1 into distillation tower 101 is selected as appropriate depending on whether distillation of organic substance-containing hydrochloric acid 1 is performed in a batch-wise manner or in a continuous manner. As described below, it is preferable that organic substance-containing hydrochloric acid 1 is subjected to distillation in a continuous manner. In this case, organic substance-containing hydrochloric acid 1 is continuously introduced into distillation tower 101. In consideration of the separation efficiency of the organic substance by distillation and the efficiency of preventing distillation of hydrochloric acid out of the top of the tower, it is preferable that the position where organic substance-containing hydrochloric acid 1 is introduced into distillation tower 101 (the position of piping 102 in distillation tower 101) is located in proximity to the center section with respect to the height direction of distillation tower 101.

Organic substance-containing hydrochloric acid 1 introduced into distillation tower 101 is subjected to distillation. The distillation causes the organic substance to be distilled and removed out of the top of distillation tower 101. A purified hydrochloric acid 3 substantially not containing any organic substance is collected from the bottom of distillation tower 101. The organic substance is collected from the top of the tower as a mixture 2 of the organic substance and water (see Fig. 1). By performing this operation, hydrochloric acid substantially not containing any organic substance can be obtained.

In the present invention, the operation pressure in the above-described distillation is set such that the azeotropic hydrogen chloride concentration under the operation pressure is higher than the hydrogen chloride concentration of the organic substance-containing hydrochloric acid subjected to distillation. The value of the operation pressure satisfying such a condition is determined based on the hydrogen chloride concentration of the organic substance-containing hydrochloric acid and the relationship between the pressure and the azeotropic hydrogen chloride concentration of hydrochloric acid shown in Fig. 3. When distillation is performed at an operation pressure set such that the azeotropic hydrogen chloride concentration under the operation pressure is equal to or less than the hydrogen chloride concentration of the organic substance-containing hydrochloric acid, hydrogen chloride is to be mixed into the fraction collected from the top of the tower. This may cause loss of hydrogen chloride due to purification. In contrast, when distillation is performed at the operation pressure set such that the azeotropic hydrogen chloride concentration under the operation pressure is higher than the hydrogen chloride concentration of the organic substance-containing hydrochloric acid, distilling out of hydrogen chloride from the top of the tower can be prevented while the organic substance can be selectively removed.

It is preferable that the operation pressure for distillation is selected from the range of 1 kPa to 90 kPa (absolute pressure). The pressure reduced below 1 kPa may be difficult to be achieved in a manufacturing plant and the like. The present invention employs the organic substance-containing hydrochloric acid subjected to distillation that has a hydrogen chloride concentration higher than the azeotropic hydrogen chloride concentration under atmospheric pressure. Accordingly, the operation pressure should inevitably be lower than atmospheric pressure in order to set the azeotropic hydrogen chloride concentration under the operation pressure to be higher than the hydrogen chloride concentration of the organic substance-containing hydrochloric acid subjected to distillation. When the hydrogen chloride concentration of the organic substance-containing hydrochloric acid is extremely close to the azeotropic hydrogen chloride concentration (20.2 percent by mass) at 101.3 kPa (= 1 atm), the operation pressure is at least set below 101.3 kPa. This allows removal of the organic substance while preventing distillation of hydrogen chloride out of the top of the tower. In this case, however, it is preferable to set the operation pressure at 80 kPa or lower in order to more effectively prevent distillation of hydrogen chloride out of the top of the tower. In general, the greater the difference is between the operation pressure and the pressure at which the hydrogen chloride concentration of the organic substance-containing hydrochloric acid subjected to distillation is equal to the azeotropic hydrogen chloride concentration, the more effectively distillation of hydrogen chloride out of the top of the tower can be prevented.

The operation temperature for distillation (the temperature at the bottom of the distillation tower) depends on the operation pressure and the like, but is usually approximately 18 °C to 106 °C.

The type of the distillation tower is not particularly limited, and may be a commonly used distillation tower such as a packed tower or a tray tower, in which case a packed tower is preferable since it has a simplified structure. Examples of a packing agent packed into the packed tower may include, for example, a conventional agent such as Raschig ring, Paul ring, or Tellerette (registered trademark). In order to more efficiently suppress or prevent distillation of hydrogen chloride out of the top of the tower, it is preferable, as shown in Fig. 1, that a condensation unit including a piping 103, a heat exchanger (condenser) 104 and a piping 105 is provided at the top of distillation tower 101, to perform the reflux operation by which the gas distilled out of the top of the tower is condensed to obtain a condensate liquid, a part of which is then returned to the top of the tower. Also as shown in Fig. 1, a piping 106, a heat exchanger (reboiler) 107 and a piping 108 can be provided at the bottom of distillation tower 101. In this case, when an operation is performed for returning a part of a liquid extracted from the bottom of distillation tower 101 back to the bottom thereof, the organic substance concentration in purified hydrochloric acid can be further decreased.

Distillation of the organic substance-containing hydrochloric acid can be performed either in a continuous manner or in a batch-wise manner, but preferably performed in a continuous manner. In the case where distillation is performed in a batch-wise manner and there is only a slight difference between the operation pressure and the pressure at which the hydrogen chloride concentration of the organic substance-containing hydrochloric acid subjected to distillation is equal to the azeotropic hydrogen chloride concentration, the operation pressure may need to be shifted to be further reduced in accordance with development of distillation in order to prevent distillation of hydrogen chloride out of the top of the tower. When distillation is performed in a continuous manner, the organic substance-containing hydrochloric acid is continuously introduced into the distillation tower while continuously collecting the mixture of the organic substance and water from the top of the tower and also continuously collecting the purified hydrochloric acid from the bottom of the tower. Consequently, the hydrogen chloride concentration of the organic substance-containing hydrochloric acid within the distillation tower can be kept stationary. This eliminates the need to adjust the operation pressure during distillation.

Purified hydrochloric acid obtained by the method according to the present invention is high-purity hydrochloric acid substantially not containing any organic substance (for example, approximately 0.1 mass ppm or lower). Furthermore, according to the method of the present invention, hydrogen chloride is hardly distilled out of from the top of the tower during distillation. Accordingly, the resultant purified hydrochloric acid is to contain a total or an approximately total amount of hydrogen chloride contained in the organic substance-containing hydrochloric acid introduced into the distillation tower. Therefore, the loss of hydrogen chloride caused by the purification process can be completely or nearly completely suppressed.

Since the purified hydrochloric acid obtained by the method according to the present invention is high-purity hydrochloric acid substantially not containing an organic substance, the purified hydrochloric acid can be suitably used as a raw material in the compound synthesizing process such as a hydrochloric acid oxidation process and also used as hydrochloric acid for food additives. Furthermore, in the case where the purified hydrochloric acid is used as hydrochloric acid for neutralization of alkaline waste water, the produced neutralized water can be released as waste water since it does not substantially contain any organic substance.

### Examples

Although the present invention will be hereinafter described in more detail with reference to an Example, the present invention is not limited thereto.

### [Example 1]

Fig. 2 is a flow diagram schematically showing an example of the process for obtaining high-purity hydrochloric acid substantially not containing isopropyl alcohol (IPA) from an organic substance-containing hydrochloric acid containing IPA in accordance with the present invention. Fig. 2 shows the operating conditions of the distillation tower, and the material balances of hydrogen chloride and IPA. The present example will be hereinafter described with reference to Fig. 2.

As shown in Fig. 2, provided is a distillation tower (packed tower) having a total theoretical plate number of 16 and equipped with a condenser at the top of the tower (the return piping from the condenser is installed at the first plate) and also equipped with a reboiler at the bottom of the tower. Into the distillation tower, the organic substance-containing hydrochloric acid containing IPA (hydrogen chloride concentration: 21.7 percent by mass, IPA concentration: 26 mass ppm) is continuously supplied through the fourth plate of the distillation tower (the flow rate of hydrogen chloride: 250 kg/h, the flow rate of water: 900 kg/h, the flow rate of IPA: 0.03 kg/h). The organic substance-containing hydrochloric acid introduced into the distillation tower is subjected to distillation on the conditions that the operation temperature (the temperature at the bottom of the tower) is 75 °C and the operation pressure is 10 kPa (absolute pressure). Then, a mixture of IPA and water (the flow rate of water: 8 kg/h, the flow rate of IPA: 0.03 kg/h, the flow rate of hydrogen chloride: 0 kg/h) is continuously collected from the top of the tower. Also, a purified hydrochloric acid not containing IPA (the flow rate of hydrogen chloride: 250 kg/h, the flow rate of water: 892 kg/h, the flow rate of IPA: 0.00 kg/h) is continuously collected from the bottom of the tower (the hydrogen chloride concentration of the purified hydrochloric acid: 21.9 percent by mass). During the distillation, heating by the reboiler is performed at 78 kW and heat removal by the condenser is performed at 33 kW.

It should be understood that the embodiments and examples disclosed herein are illustrative and non-restrictive in every respect. The scope of the present invention is defined by the claims, rather than the description above, and is intended to include any modifications within the scope and meaning equivalent to the claims.

### DESCRIPTION OF THE REFERENCE SIGNS

1 organic substance-containing hydrochloric acid, 2 mixture of organic substance and water, 3 purified hydrochloric acid, 101 distillation tower, 102, 103, 105, 106, 108 piping, 104 heat exchanger (condenser), 107 heat exchanger (reboiler).

## Claims

1. A method of purifying hydrochloric acid by removing an organic substance having a boiling point of - 25 °C to 120 °C under atmospheric pressure from an organic substance-containing hydrochloric acid that contains the organic substance and has a hydrogen chloride concentration higher than an azeotropic hydrogen chloride concentration under atmospheric pressure, said method comprising the step of:
subjecting said organic substance-containing hydrochloric acid to distillation using a distillation tower at an operation pressure set such that an azeotropic hydrogen chloride concentration under the operation pressure is higher than the hydrogen chloride concentration of said organic substance-containing hydrochloric acid, to distill out said organic substance from a top of said distillation tower.

2. The method of purifying hydrochloric acid according to claim 1, comprising the steps of:
continuously introducing said organic substance-containing hydrochloric acid into said distillation tower; and
subjecting said organic substance-containing hydrochloric acid to distillation using the distillation tower at the operation pressure set such that the azeotropic hydrogen chloride concentration under the operation pressure is higher than the hydrogen chloride concentration of said organic substance-containing hydrochloric acid, to distill out said organic substance from the top of said distillation tower and continuously collect hydrochloric acid substantially not containing said organic substance from a bottom of said distillation tower.

3. The method of purifying hydrochloric acid according to claim 1, wherein said operation pressure is in a range of 1 kPa to 90 kPa.

4. The method of purifying hydrochloric acid according to claim 1, wherein, during the distillation of said organic substance-containing hydrochloric acid, said organic substance is distilled out from the top of said distillation tower while reflux is performed for condensing distillate gas from the top of said distillation tower and returning a part of an obtained condensate liquid to the top of said distillation tower.

5. The method of purifying hydrochloric acid according to claim 1, wherein said organic substance includes at least one of isopropyl alcohol, 2-chloropropane and allyl chloride.
